# EUROPÄISCHE PATENTANMELDUNG

(11) **EP 2 403 110 A1**
(43) Veröffentlichungstag der Anmeldung: **04.01.2012**
(21) Anmeldenummer: 10006805.5
(22) Anmeldetag: 01.07.2010
(51) Int. Cl.: H02K 3/24

(54) **Kühlungsschlitz für Leiterstab**

(71) Anmelder: Siemens Aktiengesellschaft, 80333 München (DE)
(72) Erfinder: Keferstein, Lutz, 46284 Dorsten (DE)

(57) **Zusammenfassung**

Die Erfindung betrifft eine Wicklung für eine elektrische Maschine (1), insbesondere einen Turbogenerator, mit mehreren übereinander angeordneten Leiterstäben (5), wobei die Leiterstäbe (5) jeweils einen Kühlungsschlitz (11) aufweisen, wobei die Kühlungsschlitze (11) verjüngt oder erweitert ausgebildet sind, wobei in einem Übergangsbereich eine Stufe zur Verwirbelung eines Kühlmediums ausgebildet ist.

## Beschreibung

Die Erfindung betrifft eine Wicklung für eine elektrische Maschine, mit mehreren übereinander angeordneten Leiterstäben, wobei die Leitungsstäbe jeweils einen in eine Tiefenrichtung ausgebildeten Kühlungsschlitz aufweisen.

Des Weiteren betrifft die Erfindung ein Verfahren zur Herstellung eines Kühlungsschlitzes eines Leiterstabes für eine elektrische Maschine.

Eine elektrische Maschine, wie beispielsweise ein Turbogenerator, ist aus der EP 1 742 330 A1 bekannt. Solch eine elektrische Maschine weist einen antreibbaren, drehbeweglich gelagerten Rotor, der auch Läufer genannt wird, und einen den Rotor umgebenden ortsfesten Stator, der auch Statorteil genannt wird, auf. Der Rotor umfasst eine zylinderförmige Rotorwelle, die sich in Wellenlängsrichtung mittig zu einem Rotorballen verdickt. Der Rotorballen wird auch als Läuferballen bezeichnet. Auf dem Rotorballen ist eine mit einem Strom beaufschlagbare Erregerwicklung angeordnet. Der Stator weist eine Statorwicklung auf. Zur Erzeugung von elektrischer Energie ist die Rotorwelle mit einem Antrieb, insbesondere mit einer Antriebswelle einer Turbine, gekoppelt. Auf diese Weise lässt sich der Rotor in eine Drehbewegung gegenüber dem ortsfesten Stator versetzen. Wird dabei der Rotor von einem Strom durchflossen, so wird ein magnetisches Drehfeld erzeugt, das in der Statorwicklung einen elektrischen Strom induziert. Heutzutage weist ein Turbogenerator eine elektrische Leistung zwischen 100 und 1500 Megawatt auf.

Es ist des Weiteren bekannt, den Zylindermantel des Rulorballens mit in Wellenlängsrichtung verlaufenden und in Umfangsrichtung zueinander beabstandeten Nuten zu versehen und die Erregerwicklung in diesen Nuten anzuordnen. In den Nuten sind dazu eine Mehrzahl von in Wellenlängsrichtung verlaufenden und gegeneinander isolierten Leiterstäben übereinander gestapelt. Zur Zylindermantelfläche des Rotorballens hin ist ein in eine Profilierung eingeschobener Nutverschlusskeil zum Absichern der Leiterstäbe gegen die bei der Umdrehung des Rotors herrschenden Fliehkräfte vorgesehen. Bei einem Turbogenerator besteht das Bestreben, eine möglichst hohe elektrische Leistung zu erreichen. Die erreichbare elektrische Leistung eines Turbogenerators hängt unter anderem von der Magnetfeldstärke des magnetischen Drehfeldes ab, das von der Erregerwicklung des Rotors erzeugt wird. Je höher die Magnetfeldstärke, desto höher ist entsprechend die elektrische Leistung des Turbogenerators.

Da die Leiterstäbe im Betrieb durch die elektrischen Ströme stark erwärmt werden, müssen sie gekühlt werden. Dazu ist es bekannt, die Leiterstäbe mit Luft, Gas oder Wasser zu kühlen. Dabei werden die aus einem leitfähigen Material, insbesondere Kupfer, ausgebildeten Leiterstäbe mittels Bohrungen versehen, wobei durch diese Bohrungen ein Kühlungsmedium strömt. Es sind radial ausgerichtete und auch axial ausgerichtete Kühlungspfade in den Leiterstäben bekannt. Beispielsweise werden Kühlungspfade in axialer oder radialer Richtung derart ausgebildet, dass in die übereinander angeordneten Leiterstäbe ein Schlitz eingefräst wird, durch den ein Kühlungsmedium strömen kann. Damit der Wärmeübertrag möglichst groß ist, werden diese Schlitze gestuft ausgeführt, damit an der Stufe eine Verwirbelung des Kühlmediums stattfindet und somit ein Wärmeübergangskoeffizient erhöht wird, was zu einer besseren Kühlung führt.

Bisherige Leiterstäbe weisen langlochförmige Kühlungsschlitze auf, welche mit einem umlaufenden Absatz versehen sind. Im Wesentlichen handelt es sich dabei um direkt stirnseitig aneinandergrenzende Langlochgeometrien, wobei eine erste Langlochgeometrie eine geringere Breite hat als die benachbarte zweite Langlochgeometrie. Der dadurch entstehende umlaufende Absatz dient der Erzeugung eines Wirbels, so dass der Wärmeübergang gegenüber einer rein zylindrischen Ausbildung des Kühlkanals verbessert wird.

Allerdings wird durch e,ine solche Stufe die Herstellung des Kühlungsschlitzes vergleichsweise kostenaufwändig, da die Stufe durch eine Fräsung erfolgt. Des Weiteren ist solch eine Herstellung vergleichsweise zeitaufwändig. Wünschenswert wäre es, einen Kühlungspfad im Leiterstab schnell und kostengünstig herstellen zu können.

Daher ist es Aufgabe der Erfindung, eine Wicklung anzugeben, die günstig und schnell hergestellt werden kann.

Gelöst wird diese Aufgabe durch eine Wicklung für eine elektrische Maschine, mit mehreren übereinander angeordneten Leiterstäben, wobei die Leiterstäbe jeweils einen in eine Tiefenrichtung ausgebildeten Kühlungsschlitz mit einer Breite b aufweisen, wobei die Breite b der Kühlungsschlitze der übereinander angeordneten Leiterstäbe von Leiterstab zu Leiterstab variiert.

Die Erfindung geht somit einen anderen Weg, als es durch die Ausführung mit einer gefrästen Stufe im Schlitz vorsieht. Eine Stufe in dem Kühlungsschlitz ist demnach nicht mehr vorgesehen. Vielmehr wird der Kühlungsschlitz im Wesentlichen durch einen Herstellungsschritt derart ausgeführt. Da die Leiterstäbe übereinander angeordnet werden, entstehen an den Übergängen zwischen den einzelnen Leiterstäben einzelne Stufen, an der das Kühlmedium lokal umgelenkt und verwirbelt wird. Dies führt zu einer besseren Wärmeübertragung des Kühlungsmediums auf den Leiterstab.

Vorteilhafte Weiterbildungen sind in den Unteransprüchen angegeben.

Ein Vorteil der Erfindung ist, dass ein Langloch vergleichsweise leicht hergestellt werden kann. Eine Möglichkeit, solch ein Langloch auszubilden, ist beispielsweise durch eine Fräsung oder durch eine Wasserstrahltrennung möglich.

In einer ersten vorteilhaften Weiterbildung werden die Kühlungsschlitze derart ausgebildet, dass die Breite des Kühlungsschlitzes eines Leiterstabs und die Breite des Kühlungsschlitzes des übernächst benachbart angeordneten Leiterstabs im Wesentlichen gleich ist. Somit weisen die als Langlöcher ausgebildeten Kühlungsschlitze abwechselnd ein breites und schmales Langloch auf. Auf diese Weise werden ebenfalls Wirbel erzeugt.

In einer weiteren vorteilhaften Weiterbildung wird der Kühlungsschlitz durch zumindest eine in Tiefenrichtung geradlinig verlaufende Begrenzungswand begrenzt. Eine geradlinig ausgebildete Begrenzungswand lässt sich vergleichsweise günstig und schnell herstellen.

In einer weiteren vorteilhaften Weitergestaltung wird der Kühlungsschlitz durch zumindest eine in Tiefenrichtung konkav oder konvex verlaufende Begrenzungswand begrenzt. Je nach vorhandenen Strömungsphänomenen kann eine konkav oder konvex ausgebildete Begrenzungswand den Wärmeübertrag an den Übergängen zwischen den einzelnen Leiterstäben erhöhen. Eine konvexe oder konkave Begrenzungswand kann eine Strömung beschleunigen oder abbremsen. Solche Abgrenzungen beschleunigen oder verzögern die Strömungsgeschwindigkeit des Kühlungsmediums. Es ist auch denkbar, abwechselnd die Begrenzungswand von Leiterstab zu Leiterstab zu ändern. Ein erster Leiterstab wird hierbei konkav und der benachbarte Leiterstab konvex ausgebildet und der übernächste Leiterstab wieder konkav und der überübernächste Leiterstab wieder konvex.

In einer vorteilhaften Weiterbildung sind die Dimensionen der Kühlungsschlitze und der Begrenzungswand derart, dass in einem Übergangsbereich zwischen zwei Kühlungsschlitzen von zwei benachbarten Leiterstäben eine Stufe ausgebildet ist. In einer vorteilhaften Weiterbildung ist der Kühlungsschlitz durch zumindest eine in Tiefenrichtung konisch verlaufende Begrenzungswand ausgebildet.

Eine konisch verlaufende Begrenzungswand lässt sich vergleichsweise einfach herstellen.

Die Erfindung wird anhand eines Ausführungsbeispiels näher erläutert. Die Figuren zeigen in schematischer Weise:
- Figur 1: einen Ausschnitt eines Rotors;
- Figur 2: eine Querschnittansicht mehrerer Leiterstäbe;
- Figur 3: eine perspektivische Ansicht übereinander angeordneten Leiterstäben;
- Figur 4: eine Querschnittansicht von mehreren übereinander angeordneten Leiterstäben gemäß dem Stand der Technik;
- Figur 5: eine Querschnittansicht von mehreren übereinander angeordneten Leiterstäben gemäß der Erfindung.

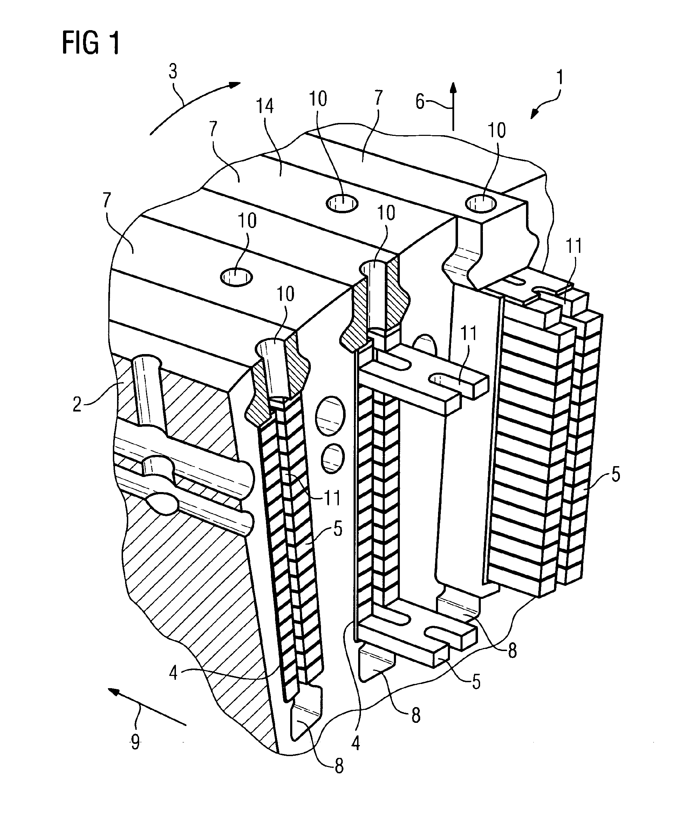

Figur 1 zeigt eine teilweise perspektivische Ansicht eines Rotors 1 einer elektrischen Maschine. Der Rotor 1 umfasst einen um eine nicht näher dargestellte Rotationsachse einen Läuferballen 2, in denen in Umfangsrichtung 3 mehrere Nuten 4 angeordnet sind. Die Nuten 4 sind in Umfangsrichtung 3 verteilt und erstrecken sich von dem einen Ende des Läuferballens 2 zum anderen Ende des Läuferballens 2 und sind somit im Wesentlichen parallel zur Rotationsachse ausgerichtet ausgebildet. In den Nuten 4 sind Leiterstäbe 5 übereinander ange-ordnet. Im Betrieb rotiert der Rotor 1 mit einer vergieichsweise hohen Umdrehungszahl von 3600 U/min bzw. 3000 U/min. Da die einzelnen Leiterstäbe 5 in Folge der Fliehkräfte in radialer Richtung 6 aus den Nuten 4 bewegt werden würden, ist ein jeweiliger Verschlusskeil 7 angeordnet, der entgegen der Fliehkräfte wirkt. Über einen Nutgrundkanal 8, der in axialer Richtung 9 verläuft, kann ein Kühlmedium, wie z. B. Luft, Gas, Stickstoff oder ggf. Wasser strömen. Über radiale Kühlungspfade 10 strömt das Kühlungsmedium aus dem Rotor 1 heraus. Im Betrieb werden die Leiterstäbe 5 mit einem elektrischen Strom beaufschlagt. Da die elektrischen Ströme vergleichsweise groß sind führt dies zu einer Erwärmung des Leiterstabes 5. Mit Hilfe des in dem radialen Kühlungspfad 10 strömenden Kühlmediums wird der Leiterstab 5 gekühlt. Der radiale Kühlungspfad 10 wird mit Hilfe von Kühlungsschlitzen 11, die in den einzelnen Leiterstäben 5 angeordnet sind, realisiert.

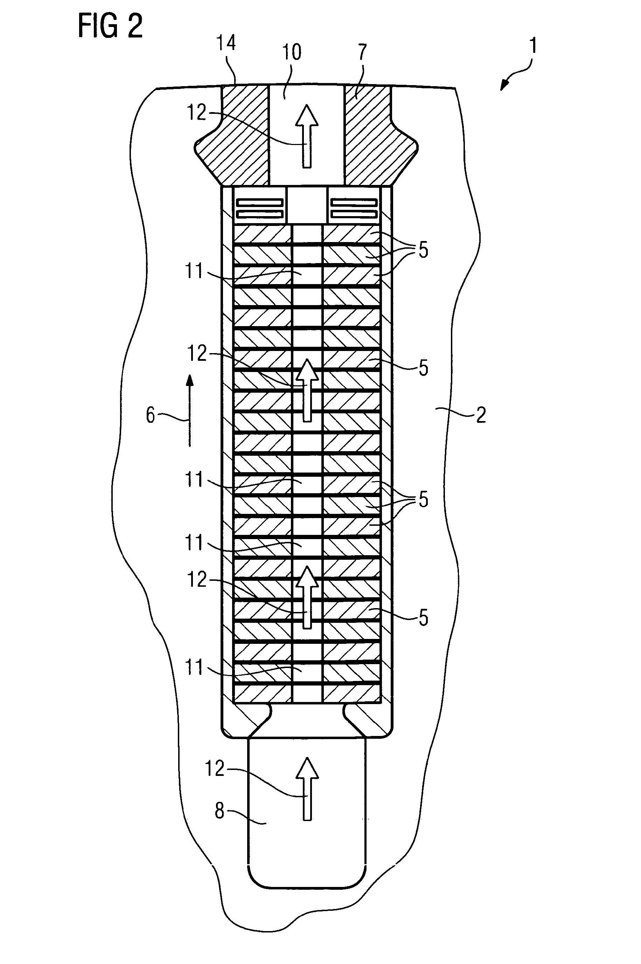

In der Figur 2 ist eine Querschnittsansicht einer Nut 4 mit übereinander angeordneten Leiterstäben 5 dargestellt. Über den Nutgrundkanal 8 strömt ein Kühlmedium und entweicht in einer Strömungsrichtung 12 in radialer Richtung 6 aus dem Rotor 1 wieder hinaus.

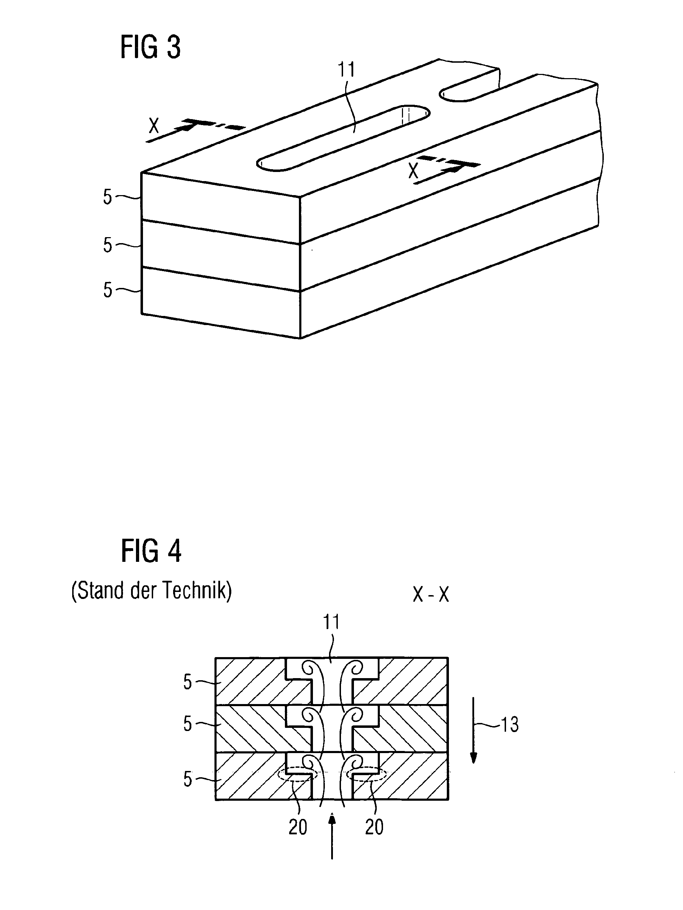

In der Figur 3 ist eine perspektivische Ansicht von übereinander angeordneten Leiterstäben mit einer vergrößerten Darstellung von einzelnen Kühlungsschlitzen 11 gezeigt. Die Kühlungsschlitze 11 sind im Wesentlichen als Langloch ausgebildet und erstrecken sich in ihrer länglichen Ausbildung im Wesentlichen parallel zur Rotationsachse. Die Größe der Kühlungsschlitze 11 ist an die Kühlungsaufgabe und an das Kühlungsmedium angepasst.

Die Figur 4 zeigt eine Querschnittsansicht entlang der Ebene X-X aus der Figur 3 der Leiterstäbe 5 gemäß dem Stand der Technik. Die Kühlungsschlitze 11 sind in der Tiefenrichtung 13 stufenartig ausgebildet, so dass innerhalb der Kühlungsschlitze 11 Stufen 20 auftreten. Diese Stufen 20 verursachen eine Verwirbelung des Kühlungsmediums und dadurch einen guten Wärmeübertrag vom Kühlungsmedium auf den Leiterstab 5. Die Stufen 20 sind hierbei innerhalb des Leiterstabs 5 angeordnet. Dazu wird der Kühlungsschlitz 11 in zumindest zwei Herstellungsverfahrensschritten mit zwei unterschiedlich großen Breiten gefertigt.

In einer ersten Ausführungsform ist die Begrenzungswand 19 der Kühlungsschlitze 11 in Tiefenrichtung 13 konkav und in einer zweiten Ausführungsform konvex ausgebildet.

In einer weiteren alternativen Ausführungsform kann sich die Form der Begrenzungswand 19 von Leiterstab 5 zu Leiterstab 5 ändern, beispielsweise kann ein erster Leiterstab 5 eine konkave Begrenzungsform und der nächste benachbarte Leiterstab 5 eine konvexe Begrenzungswand aufweisen.

In einer weiteren alternativen Ausführungsform kann neben der Form eines Kühlungsschlitzes 11 auch eine konische Form der Kühlungsschlitze 11 aufweisen, wobei der Kühlungsschlitz 11 hier einer Bohrung entsprechen würde.

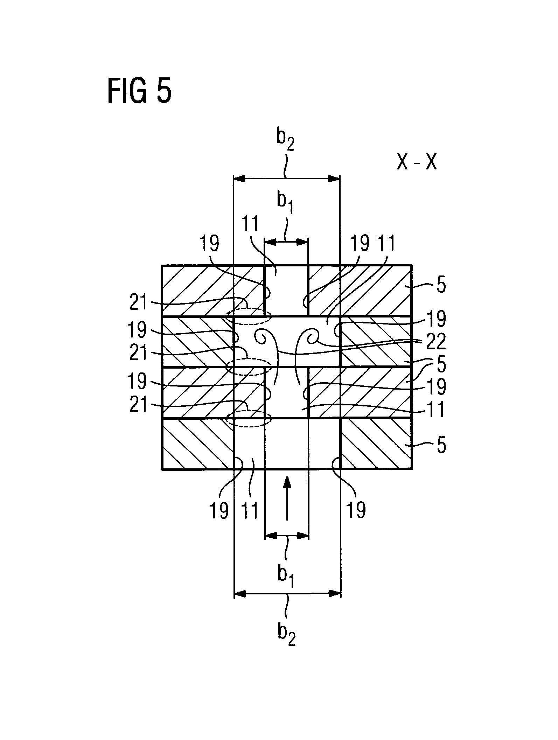

Die Figur 5 zeigt eine Querschnittsansicht entlang der Ebene X-X aus der Figur 3 der Leiterstäbe 5 gemäß der Erfindung. Die Kühlungsschlitze 11 sind als Langloch ausgebildet. Die Kühlungsschlitze 11 zeichnen sich dadurch aus, dass die Kühlungsschlitze 11 von Leiterstab 5 zu Leiterstab 5 eine unterschiedliche Breite b aufweisen. Dadurch dass die Breiten der Kühlungsschlitze 11 in den Übergangsbereichen 21 unterschiedlich ausgebildet sind, entstehen Stufen, die zu einer Verwirbelung des Kühlmediums in den Kühlungsschlitzen 11 führt. Solch eine Verwirbelung ist durch einen Wirbel 22 zwischen zwei Leiterstäben in der Figur 5 grafisch dargestellt. Solche Wirbel 22 führen dazu, dass der Wärmeübergang insbesondere in dem Leiterstab 5 mit dem breiteren Kühlungsschlitz 11 erhöht ist. Ein wesentlicher Vorteil dieser Lösung ist, dass die Kühlungsschlitze 11, die als Langloch ausgeführt sind, sehr einfach ausgebildet werden können. Die Herstellungskosten und die Fertigungszeit verkürzt sich dadurch drastisch. Die Breiten der Kühlungsschlitze 11 können derart gewählt sein, dass die Breite b1 eines Kühlungsschlitzes 11 zum übernächst benachbarten Leiterstab 5 gleich ist und die Breite b2 des dazwischen liegenden Kühlungsschlitzes 11 eines Leiterstabs 5 vergrößert oder verkleinert ist. Somit entsteht eine regelmäßige Anordnung an Leiterstäben 5 mit sich wiederholenden Breiten b1 der Kühlungsschlitze 11. Die Breiten der Kühlungsschlitze 11 würden nach dieser Ausführungsform von Leiterstab 5 zu Leiterstab 5 die Breite b1, b2, b1, b2 und so fort, aufweisen. In alternativen Ausführungsformen könnten drei unterschiedliche Breiten oder auch mehr Breiten vorkommen, die in sich wiederholenden Anordnungen aufgebaut werden können.

## Patentansprüche

1. Wicklung für eine elektrische Maschine (1),
mit mehreren übereinander angeordneten Leiterstäben (5), wobei die Leiterstäbe (5) jeweils einen in eine Tiefenrichtung (13) ausgebildeten Kühlungsschlitz (11) mit einer Breite (b) aufweisen,
**dadurch gekennzeichnet, dass**
die Breite (b) der Kühlungsschlitze (11) der übereinander angeordneten Leiterstäbe (5) von Leiterstab (5) zu Leiterstab (5) variiert.

2. Wicklung nach Anspruch 1,
wobei die Breite (b) des Kühlungsschlitzes (11) eines Leitstabs (5) und die Breite (b) des Kühlungsschlitzes (11) des übernächst benachbart angeordneten Leiterstabs (5) im Wesentlichen gleich ist.

3. Wicklung nach Anspruch 1,
wobei der Kühlungsschlitz (11) durch zumindest eine in Tiefenrichtung (13) geradlinig verlaufende Begrenzungswand (19) begrenzt ist.

4. Wicklung nach Anspruch 1 oder 2,
wobei der Kühlungsschlitz (11) durch zumindest eine in Tiefenrichtung (13) konkav verlaufende Begrenzungswand (20) begrenzt ist.

5. Wicklung nach einem der vorhergehenden Ansprüche,
wobei der Kühlungsschlitz (11) durch zumindest eine in Tiefenrichtung (13) konvex verlaufende Begrenzungswand (21) begrenzt ist.

6. Wicklung nach einem der vorhergehenden Ansprüche,
wobei der Kühlungsschlitz (11) zumindest abschnittsweise ausgebildet ist.

7. Wicklung nach einem der vorhergehenden Ansprüche,
wobei ein Übergangsbereich (18) zwischen zwei Kühlungsschlitzen (11) von zwei benachbarten Leiterstäben (5) gestuft ausgebildet ist.

8. Verfahren zur Herstellung eines Kühlungsschlitzes (11) eines Leiterstabes (5) für eine elektrische Maschine (1) unter Verwendung eines Wasserstrahlschneideverfahrens.
